(19) Europäisches Patentamt
European Patent Office
Office européen des brevets

(11) **EP 2 450 216 A2**

(12) **EUROPÄISCHE PATENTANMELDUNG**

(43) Veröffentlichungstag:
**09.05.2012 Patentblatt 2012/19**

(21) Anmeldenummer: **11185368.5**

(22) Anmeldetag: **17.10.2011**

(51) Int Cl.:
*B60K 6/48* (2007.10)    *B60K 6/485* (2007.10)
*B60W 10/06* (2006.01)    *B60W 10/08* (2006.01)
*B60W 20/00* (2006.01)    *B60W 10/11* (2012.01)
*B60W 30/19* (2012.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **09.11.2010 DE 102010043591**

(71) Anmelder: **ZF Friedrichshafen AG
88038 Friedrichshafen (DE)**

(72) Erfinder: **Reith, Ulrich
88281 Schlier (DE)**

(54) **Verfahren zur Steuerung eines Hybridantriebsstrangs eines Kraftfahrzeugs**

(57) Die Erfindung betrifft ein Verfahren zur Steuerung eines Hybridantriebsstrangs eines Kraftfahrzeugs, beispielsweise eines Nutzfahrzeugs, der einen Verbrennungsmotor (VM) mit einer Triebwelle (2), ein automatisiertes Stufenschaltgetriebe (G) mit einer über eine steuerbare Trennkupplung (K) mit der Triebwelle (2) des Verbrennungsmotors (VM) verbindbaren Eingangswelle (GE), eine als Motor und als Generator betreibbare Elektromaschine (EM) mit einem mit der Triebwelle (2) des Verbrennungsmotors (VM) in Triebverbindung stehenden Rotor (3), und einen mit der Triebwelle (2) des Verbrennungsmotors (VM) in Triebverbindung stehenden Nebenabtrieb (PTO) umfasst, wobei ein an den Nebenabtrieb (PTO) angeschlossenes Aggregat (19) angetrieben wird.

Um die trägheitsbedingten Auswirkungen des über den Nebenabtrieb (PTO) permanent angetriebenen Aggregates (19) auszugleichen oder zumindest abzuschwächen ist erfindungsgemäß vorgesehen, dass bei einer gesteuerten Drehzahländerung ($dn_{VM}/dt$) des Verbrennungsmotors (VM) das der Drehzahländerung entgegenwirkende trägheitsbedingte Drehmoment des Nebenantriebs (PTO) und des an diesen angeschlossenen Aggregates (19) durch die Abgabe oder Aufnahme eines diesem entgegengerichteten Drehmomentes ($M_{EM}$) der Elektromaschine (EM) weitgehend kompensiert wird.

Fig. 1

EP 2 450 216 A2

**Beschreibung**

Die Erfindung betrifft ein Verfahren zur Steuerung eines Hybridantriebsstrangs eines Kraftfahrzeugs, beispielsweise eines Nutzfahrzeugs, der einen Verbrennungsmotor mit einer Triebwelle, ein automatisiertes Stufenschaltgetriebe mit einer über eine steuerbare Trennkupplung mit der Triebwelle des Verbrennungsmotors verbindbaren Eingangswelle, eine als Motor und als Generator betreibbare Elektromaschine mit einem mit der Triebwelle des Verbrennungsmotors in Triebverbindung stehenden Rotor und einen mit der Triebwelle des Verbrennungsmotors in Triebverbindung stehenden Nebenabtrieb umfasst, wobei ein an den Nebenabtrieb angeschlossenes Aggregat angetrieben wird.

Die Erfindung betrifft des weiteren ein Verfahren zur Steuerung eines Hybridantriebsstrangs eines Kraftfahrzeugs, beispielsweise eines Nutzfahrzeugs, der einen Verbrennungsmotor mit einer Triebwelle, ein automatisiertes Stufenschaltgetriebe mit einer über eine steuerbare Trennkupplung mit der Triebwelle des Verbrennungsmotors verbindbaren Eingangswelle, eine als Motor und als Generator betreibbare Elektromaschine mit einem mit der Eingangswelle des Stufenschaltgetriebes in Triebverbindung stehenden Rotor, und einen mit der Eingangswelle des Stufenschaltgetriebes in Triebverbindung stehenden Nebenabtrieb umfasst, wobei ein an den Nebenabtrieb angeschlossenes Aggregat angetrieben wird.

Besonders Nutzfahrzeuge sind häufig mit mindestens einem Nebenabtrieb im Antriebsstrang versehen, über den ein angeschlossenes Aggregat vorübergehend oder permanent mit einem dem Antriebsstrang entnommenen Drehmoment angetrieben werden kann. Für einen permanenten, d.h. sowohl bei Fahrzeugstillstand als auch während der Fahrt aktiven Nebenabtrieb kann ein so genannter motorabhängiger Nebenabtrieb genutzt werden, bei dem der betreffende Abtriebsflansch über einen Getriebezug mit der Triebwelle des Verbrennungsmotors in Triebverbindung steht. Alternativ dazu kann ein so genannter kupplungsabhängiger Nebenabtrieb zur Anwendung kommen, bei dem der betreffende Abtriebsflansch über einen Getriebezug mit der Eingangswelle des Stufenschaltgetriebes in Triebverbindung steht. Typische Kraftfahrzeuge mit permanentem Nebenabtrieb sind Betonmischer, Kühlfahrzeuge und Flugfeld-Löschfahrzeuge, bei denen das betreffende Aggregat, wie die Mischtrommel, der Kühlkompressor oder die Löschpumpe, in beladenem Zustand bzw. beim Löscheinsatz permanent angetrieben werden muss.

Nachteilig an über einen Nebenantrieb permanent angetriebenen Aggregaten ist jedoch, dass die rotierenden Teile des Nebenabtriebs und des an diesen angeschlossenen Aggregates beim Beschleunigen und Verzögern des Kraftfahrzeugs wie auch bei der schaltungsbedingten Drehzahlanpassung des Verbrennungsmotors oder der Synchronisierung des Zielgangs bei einem Gangwechsel innerhalb des Stufenschaltgetriebes mitbeschleunigt bzw. mitverzögert werden müssen. Hieraus resultiert gegenüber einem Fahrbetrieb mit abgeschaltetem Nebenabtrieb ein deutlich verändertes Betriebsverhalten in Form eines langsameren Anfahrens mit einer längeren Schlupfphase der Trennkupplung und in Form einer niedrigeren Beschleunigung oder Verzögerung während der Fahrt. Ebenso resultiert hieraus ein veränderter Schaltungsablauf in Form einer veränderten Schaltdauer mit einer längeren Zugkraftunterbrechung, die in einer Steigungsstrecke zu einer unerwünschten Verzögerung und in einer Gefällestrecke zu einer unerwünschten Beschleunigung des Kraftfahrzeugs führen kann.

Andererseits schreitet die Einführung von Hybridantrieben mit mindestens einer in einen konventionellen Antriebsstrang integrierten, als Motor und als Generator betreibbaren Elektromaschine immer weiter voran. So ist z.B. die Anordnung einer als Kurbelwellen-Starter-Generator bezeichneten Elektromaschine an einer mit der Kurbelwelle eines Verbrennungsmotors befestigten Schwungscheibe bekannt. Auch ist die Anordnung einer Elektromaschine an der Eingangswelle eines Stufenschaltgetriebes bekannt, wobei der Rotor der Elektromaschine unmittelbar mit der Eingangswelle verbunden sein kann, oder über ein Untersetzungsgetriebe mit der Eingangswelle in Triebverbindung stehen kann.

In der DE 10 2007 055 830 A1 ist ein Verfahren beschrieben, das sich auf einen Hybridantriebsstrang mit einer an der Eingangswelle eines Stufenschaltgetriebes angeordneten Elektromaschine bezieht, und bei dem der Verbrennungsmotor aus dem Elektrofahrbetrieb heraus durch Schließen der Trennkupplung während eines Schaltvorgangs innerhalb des Stufenschaltgetriebes gestartet wird. In einer weiteren möglichen Anordnung nach der Patentanmeldung US 2009/0018716 A1 ist die Elektromaschine unmittelbar an einem getriebeseitigen Nebenabtrieb eines Stufenschaltgetriebes angeordnet.

Der vorliegenden Erfindung liegt die Erkenntnis zu Grunde, dass die vorgenannten Nachteile eines über einen Nebenabtrieb permanent angetriebenen Aggregates weitgehend vermieden werden können, wenn die Elektromaschine innerhalb eines Hybridantriebsstrangs bezüglich des Nebenabtriebs triebtechnisch günstig angebunden ist und in geeigneter Weise angesteuert wird. Der vorliegenden Erfindung liegt daher die Aufgabe zugrunde, jeweils ein Steuerungsverfahren für die beiden hierzu geeigneten Hybridantriebsstränge der eingangs genannten Art anzugeben, mit denen die trägheitsbedingten Auswirkungen eines über den jeweiligen Nebenabtrieb permanent angetriebenen Aggregates kompensiert oder zumindest verringert werden können.

Bezüglich der ersten Ausführungsvariante eines hierzu geeigneten Hybridantriebsstrangs nach dem Oberbegriff von Anspruch 1 ist diese Aufgabe erfindungsgemäß dadurch gelöst, dass bei einer gesteuerten, d.h. durch Steuerungsmaßnahmen gezielt herbeigeführten Drehzahländerung $dn_{VM}/dt$ des Verbrennungsmotors das der Drehzahländerung entgegenwirkende trägheitsbedingte Drehmoment des Nebenantriebs und des an diesen angeschlossenen Aggregates durch die Abgabe oder Aufnahme eines diesem entgegengerichteten Drehmomentes $M_{EM}$ der Elektromaschine EM weitgehend kompensiert wird.

Vorteilhafte Ausgestaltungen und Weiterbildungen des erfindungsgemä-βen Verfahrens sind in den zugeordneten Unteransprüchen angegeben.

Die Erfindung geht demnach aus von einem an sich bekannten Hybridantriebsstrang eines Kraftfahrzeugs, beispielsweise eines Nutzfahrzeugs, der einen Verbrennungsmotor mit einer Triebwelle, ein automatisiertes Stufenschaltgetriebe mit einer über eine steuerbare, d.h. mittels eines ansteuerbaren Kupplungsstellers ein- und ausrückbare Trennkupplung mit der Triebwelle des Verbrennungsmotors verbindbaren Eingangswelle, eine als Motor und als Generator betreibbare Elektromaschine mit einem mit der Triebwelle des Verbrennungsmotors in Triebverbindung stehenden Rotor, und einen mit der Triebwelle des Verbrennungsmotors in Triebverbindung stehenden, so genannten motorabhängigen Nebenabtrieb umfasst, an den ein Aggregat, wie z.B. der Antrieb einer Betonmischtrommel, der Kompressor einer Kühlanlage, oder die Löschpumpe einer Feuerlöschanlage, angeschlossen ist.

Bei permanentem Antrieb des an den Nebenabtrieb PTO angeschlossenen Aggregates sieht das erfindungsgemäße Verfahren allgemein vor, dass bei einer gesteuerten Drehzahländerung $dn_{VM}/dt$ des Verbrennungsmotors das der Drehzahländerung entgegenwirkende trägheitsbedingte Drehmoment des Nebenantriebs PTO und des über diesen permanent angetriebenen Aggregates durch die Abgabe oder Aufnahme eines diesem entgegengerichteten Drehmomentes $M_{EM}$ der Elektromaschine EM weitgehend kompensiert wird.

Reicht das bei einer Beschleunigung des Verbrennungsmotors im Motorbetrieb von der Elektromaschine EM maximal abgebbare Drehmoment (Antriebsmoment, $M_{EM} > 0$) und bei einer Verzögerung des Verbrennungsmotors im Generatorbetrieb von der Elektromaschine EM maximal aufnehmbare Drehmoment (Bremsmoment, $M_{EM} < 0$) aus, kann die trägheitsbedingte Wirkung des Nebenabtriebs PTO und des an diesen angeschlossenen Aggregates vollständig kompensiert werden. Das Beschleunigungs- und Verzögerungsverhalten des Verbrennungsmotors entspricht dann exakt demjenigen ohne angeschlossenes Aggregat bzw. mit abgeschaltetem Nebenabtrieb PTO. Für den Fahrer ist dann kein unterschiedliches Betriebsverhalten ohne und mit aktivem Nebenabtrieb PTO erkennbar.

Wenn das bei einer Beschleunigung des Verbrennungsmotors im Motorbetrieb von der Elektromaschine EM maximal abgebbare Drehmoment (Antriebsmoment, $M_{EM} > 0$) und bei einer Verzögerung des Verbrennungsmotors im Generatorbetrieb von der Elektromaschine EM maximal aufnehmbare Drehmoment (Bremsmoment, $M_{EM} < 0$) dagegen nicht ausreicht, ist die trägheitsbedingte Wirkung des Nebenabtriebs PTO und des an diesen angeschlossenen Aggregates für den Fahrer noch wahrnehmbar, jedoch deutlich abgeschwächt und somit weniger relevant.

Bei einer Hochschaltung, insbesondere bei einer Zug-Hochschaltung, innerhalb des Stufenschaltgetriebes ist erfindungsgemäß vorgesehen, dass während der Hochschaltung die Drehzahlanpassung des Verbrennungsmotors dadurch unterstützt wird, dass die Elektromaschine EM im Generatorbetrieb ein entsprechendes Bremsmoment ($M_{EM} < 0$) aufnimmt. Hierdurch erfolgt die Verzögerung der Triebwelle des Verbrennungsmotors im Rahmen der Drehzahlanpassung ohne einen Eingriff der Motorsteuerung in etwa in derselben Zeitspanne wie ohne angeschlossenes Aggregat bzw. wie bei abgeschaltetem Nebenabtrieb PTO, so dass keine Verzögerung im Schaltungsablauf der Hochschaltung auftritt.

Analog dazu ist bei einer Rückschaltung, insbesondere bei einer Schub-Rückschaltung, innerhalb des Stufenschaltgetriebes erfindungsgemäß vorgesehen, dass während der Rückschaltung die Drehzahlanpassung des Verbrennungsmotors dadurch unterstützt wird, dass die Elektromaschine EM im Motorbetrieb ein entsprechendes Antriebsmoment ($M_{EM} > 0$) abgibt. Hierdurch erfolgt die Beschleunigung der Triebwelle des Verbrennungsmotors im Rahmen der Drehzahlanpassung ohne einen Eingriff der Motorsteuerung in etwa in derselben Zeitspanne wie ohne angeschlossenes Aggregat bzw. wie bei abgeschaltetem Nebenabtrieb PTO, so dass keine Verzögerung im Schaltungsablauf der Rückschaltung auftritt.

Wenn das Trägheitsmoment $J_{PTO}$ des Nebenabtriebs PTO und des an diesen angeschlossenen Aggregates bekannt ist, z.B. durch entsprechende Herstellerangaben oder aus Beschleunigungsvergleichen mit und ohne eingeschalteten Nebenabtrieb, kann die Höhe des zu dessen Kompensation von der Elektromaschine EM aufzunehmenden oder abzugebenden Drehmomentes $M_{EM}$ nach der Gleichung

$$M_{EM} = J_{PTO} * \pi / (30 * i_{EM} * i_{PTO}^{2}) * dn_{VM}/dt$$

bestimmt werden, wobei mit $i_{EM}$ die Übersetzung zwischen dem Rotor der Elektromaschine EM und der Triebwelle des Verbrennungsmotors, mit $i_{PTO}$ die Übersetzung zwischen der Triebwelle des Verbrennungsmotors und dem Abtriebsflansch des Nebenabtriebs PTO, und mit $dnV_{M}/dt$ der vorgesehene Drehzahlgradient an der Triebwelle des Verbrennungsmotors bezeichnet sind.

Bezüglich einer zweiten Ausführungsvariante eines hierzu geeigneten Hybridantriebsstrangs nach dem Oberbegriff von Anspruch 5 ist die an die Erfindung gestellte Aufgabe dadurch gelöst, dass bei einer gesteuerten, d.h. durch Steuerungsmaßnahmen gezielt herbeigeführten Drehzahländerung $dn_{GE}/dt$ der Eingangswelle GE des Stufenschaltgetriebes das der Drehzahländerung entgegenwirkende trägheitsbedingte Drehmoment des Nebenabtriebs PTO' und des an diesen angeschlossenen Aggregates durch die Abgabe oder Aufnahme eines diesem entgegengerichteten Drehmomentes $M_{EM}$' der Elektromaschine EM' weitgehend kompensiert wird.

Vorteilhafte Ausgestaltungen und Weiterbildungen des erfindungsgemä-βen Verfahrens sind in den zugeordneten Unteransprüchen 6 bis 11 angegeben.

Die Erfindung geht in diesem Fall aus von einem an sich bekannten Hybridantriebsstrang eines Kraftfahrzeugs, beispielsweise eines Nutzfahrzeugs, der einen Verbrennungsmotor mit einer Triebwelle, ein automatisiertes Stufenschaltgetriebe mit einer über eine steuerbare, d.h. mittels eines ansteuerbaren Kupplungsstellers ein- und ausrückbare Trennkupplung mit der Triebwelle des Verbrennungsmotors verbindbaren Eingangswelle, eine als Motor und als Generator betreibbare Elektromaschine EM' mit einem mit der Eingangswelle des Stufenschaltgetriebes in Triebverbindung stehenden Rotor, und einen mit der Eingangswelle des Stufenschaltgetriebes in Triebverbindung stehenden, so genannten kupplungsabhängigen Nebenabtrieb PTO' umfasst, an den ein Aggregat, wie z.B. der Antrieb einer Betonmischtrommel, der Kompressor einer Kühlanlage oder die Löschpumpe einer Feuerlöschanlage, angeschlossen ist.

Bei permanentem Antrieb des an den Nebenabtrieb PTO' angeschlossenen Aggregates sieht das erfindungsgemäße Verfahren allgemein vor, dass bei einer gesteuerten Drehzahländerung $dn_{GE}/dt$ der Eingangswelle GE des Stufenschaltgetriebes das der Drehzahländerung entgegenwirkende trägheitsbedingte Drehmoment des Nebenantriebs PTO' und des über diesen permanent angetriebenen Aggregates durch die Abgabe oder Aufnahme eines diesem entgegengerichteten Drehmomentes $M_{EM}$' der Elektromaschine EM' weitgehend kompensiert wird.

Reicht das bei einer Beschleunigung der Getriebeeingangswelle im Motorbetrieb von der Elektromaschine EM' maximal abgebbare Drehmoment (Antriebsmoment, $M_{EM}$' > 0) und bei einer Verzögerung der Getriebeeingangswelle im Generatorbetrieb von der Elektromaschine EM' maximal aufnehmbare Drehmoment (Bremsmoment, $M_{EM}$' < 0) aus, so kann die trägheitsbedingte Wirkung des Nebenabtriebs PTO' und des an diesen angeschlossenen Aggregates vollständig kompensiert werden. Die Beschleunigungs- und Verzögerungseigenschaften der Getriebeeingangswelle entsprechen dann exakt denjenigen ohne angeschlossenes Aggregat bzw. mit abgeschaltetem Nebenabtrieb PTO'. Für den Fahrer ist dann kein unterschiedliches Betriebsverhalten ohne und mit aktivem Nebenabtrieb PTO' erkennbar.

Wenn das von der Elektromaschine EM' maximal abgebbare Drehmoment (Antriebsmoment, $M_{EM}$' > 0) und maximal aufnehmbare Drehmoment (Bremsmoment, $M_{EM}$' < 0) hierzu jedoch nicht ausreichen, wird die trägheitsbedingte Wirkung des Nebenabtriebs PTO' und des an diesen angeschlossenen Aggregates durch die entsprechende Ansteuerung der Elektromaschine EM' zumindest stark reduziert und somit in seiner Wirkung abgeschwächt.

Bei einer Hochschaltung, insbesondere bei einer Zug-Hochschaltung innerhalb des Stufenschaltgetriebes ist erfindungsgemäß vorgesehen, dass die Synchronisierung des Zielgangs, die durch eine Verzögerung der Eingangswelle des Stufenschaltgetriebes erfolgt, dadurch unterstützt wird, dass die Elektromaschine EM' im Generatorbetrieb ein entsprechendes Bremsmoment ($M_{EM}$' < 0) aufnimmt. Hierdurch erfolgt die Verzögerung der Getriebeeingangswelle im Rahmen der Synchronisierung des Zielgangs ohne einen Eingriff in die Getriebesteuerung in etwa in derselben Zeitspanne wie ohne angeschlossenes Aggregat bzw. wie bei abgeschaltetem Nebenabtrieb PTO', so dass keine Verzögerung im Schaltungsablauf der Hochschaltung auftritt.

Analog dazu ist bei einer Rückschaltung, insbesondere bei einer Schub-Rückschaltung innerhalb des Stufenschaltgetriebes erfindungsgemäß vorgesehen, dass während der Rückschaltung die Synchronisierung des Zielgangs, die durch eine Beschleunigung der Eingangswelle des Stufenschaltgetriebes erfolgt, dadurch unterstützt wird, dass die Elektromaschine EM' im Motorbetrieb ein entsprechendes Antriebsmoment ($M_{EM}$' > 0) abgibt. Hierdurch erfolgt die Beschleunigung der Getriebeeingangswelle im Rahmen der Synchronisierung des Zielgangs ohne einen Eingriff in die Getriebesteuerung in etwa in derselben Zeitspanne wie ohne angeschlossenes Aggregat bzw. wie bei abgeschaltetem Nebenabtrieb PTO', so dass keine Verzögerung im Schaltungsablauf der Rückschaltung auftritt.

Wenn das Trägheitsmoment $J_{PTO}$' des Nebenabtriebs PTO' und des an diesen angeschlossenen Aggregates, z.B. durch entsprechende Herstellerangaben oder aus Beschleunigungsvergleichen mit und ohne eingeschalteten Nebenabtrieb PTO', bekannt ist, kann die Höhe des zu dessen Kompensation von der Elektromaschine EM aufzunehmenden oder abzugebenden Drehmomentes $M_{EM}$' nach der Gleichung

$$M_{EM}' = J_{PTO}' * \pi / (30 * i_{EM}' * i_{PTO}'^2) * dn_{GE}/dt$$

bestimmt werden, wobei mit $J_{PTO}$' das Trägheitsmoment des Nebenantriebs PTO' und des an diesen angeschlossenen Aggregates, mit $i_{EM}$' die Übersetzung zwischen dem Rotor der Elektromaschine EM' und der Eingangswelle des Stufenschaltgetriebes, mit $i_{PTO}$' die Übersetzung zwischen der Eingangswelle des Stufenschaltgetriebes und dem Abtriebsflansch des Nebenabtriebs PTO', und mit $dn_{GE}/dt$ der vorgesehene Drehzahlgradient an der Eingangswelle des Stufenschaltgetriebes bezeichnet sind.

Für beide Ausführungsvarianten des Hybridantriebsstrangs ist beim Anfahren mit anfänglich schlupfender Trennkupplung vorgesehen, dass die Elektromaschine EM, EM' zur Kompensation des trägheitsbedingten Drehmomentes des Nebenantriebs PTO, PTO' und des an diesen angeschlossenen Aggregates im Motorbetrieb zumindest ein entsprechendes Antriebsmoment ($M_{EM} > 0$, $M_{EM}' > 0$) abgibt. Hierdurch wird sichergestellt, dass die Anfahrbeschleunigung mit über den Nebenabtrieb angetriebenem Aggregat nicht niedriger ist als beim Anfahren ohne Nebenabtrieb bzw. mit abgeschaltetem Aggregat. Ebenso wird hierdurch erreicht, dass die verschleißintensive Schlupfphase der Trennkupplung nicht länger dauert als beim Anfahren ohne Nebenabtrieb bzw. mit abgeschaltetem Aggregat.

Ebenso ist für beide Ausführungsvarianten des Hybridantriebsstrangs bei einer Beschleunigung des Kraftfahrzeugs während der Fahrt mit geschlossener Trennkupplung, insbesondere auch bei einem Wechsel vom Schubbetrieb in den Zugbetrieb vorgesehen, dass die Elektromaschine EM, EM' zur Kompensation des trägheitsbedingten Drehmomentes des Nebenantriebs PTO, PTO' und des an diesen angeschlossenen Aggregates im kraftlosen Ruhezustand ($M_{EM} = 0$, $M_{EM}' = 0$) eingeschaltet wird und dann im Motorbetrieb ein entsprechendes Antriebsmoment ($M_{EM} > 0$, $M_{EM}' > 0$) abgibt, bei schon vorliegendem Motorbetrieb ein entsprechend erhöhtes Antriebsmoment abgibt, und bei vorliegendem Generatorbetrieb ein entsprechend verringertes Bremsmoment aufnimmt. Hierdurch wird erreicht, dass das Beschleunigungsverhalten des Kraftfahrzeugs mit angetriebenem Aggregat weitgehend demjenigen mit abgeschaltetem Aggregat entspricht.

Analog dazu ist für beide Ausführungsvarianten des Hybridantriebsstrangs bei einer Verzögerung des Kraftfahrzeugs während der Fahrt mit geschlossener Trennkupplung, insbesondere auch bei einem Wechsel vom Zugbetrieb in den Schubbetrieb vorgesehen, dass die Elektromaschine EM, EM' zur Kompensation des trägheitsbedingten Drehmomentes des Nebenantriebs PTO, PTO' und des an diesen angeschlossenen Aggregates im kraftlosen Ruhezustand ($M_{EM} = 0$, $M_{EM}' = 0$) eingeschaltet wird und dann im Generatorbetrieb ein entsprechendes Bremsmoment ($M_{EM} < 0$, $M_{EM}' < 0$) aufnimmt, bei schon vorliegendem Generatorbetrieb ein entsprechend erhöhtes Bremsmoment aufnimmt, und bei vorliegendem Motorbetrieb ein entsprechend verringertes Antriebsmoment abgibt. Hierdurch wird erreicht, dass das Verzögerungsverhalten des Kraftfahrzeugs mit angetriebenem Aggregat weitgehend demjenigen mit abgeschaltetem Aggregat entspricht.

Zur Verdeutlichung der Erfindung ist der Beschreibung eine Zeichnung mit Ausführungsbeispielen beigefügt. In dieser zeigt

Fig. 1    Drehzahlverläufe der Triebwelle des Verbrennungsmotors bzw. der Eingangswelle des Stufenschaltgetriebes bei einer Zug-Hochschaltung in einem schematischen Diagramm,

Fig. 2    eine erste Ausführungsvariante eines Hybridantriebsstrangs mit einem motorabhängigen Nebenabtrieb in einer schematischen Ansicht, und

Fig. 3    eine zweite Ausführungsvariante eines Hybridantriebsstrangs mit einem kupplungsabhängigen Nebenabtrieb in einer schematischen Ansicht.

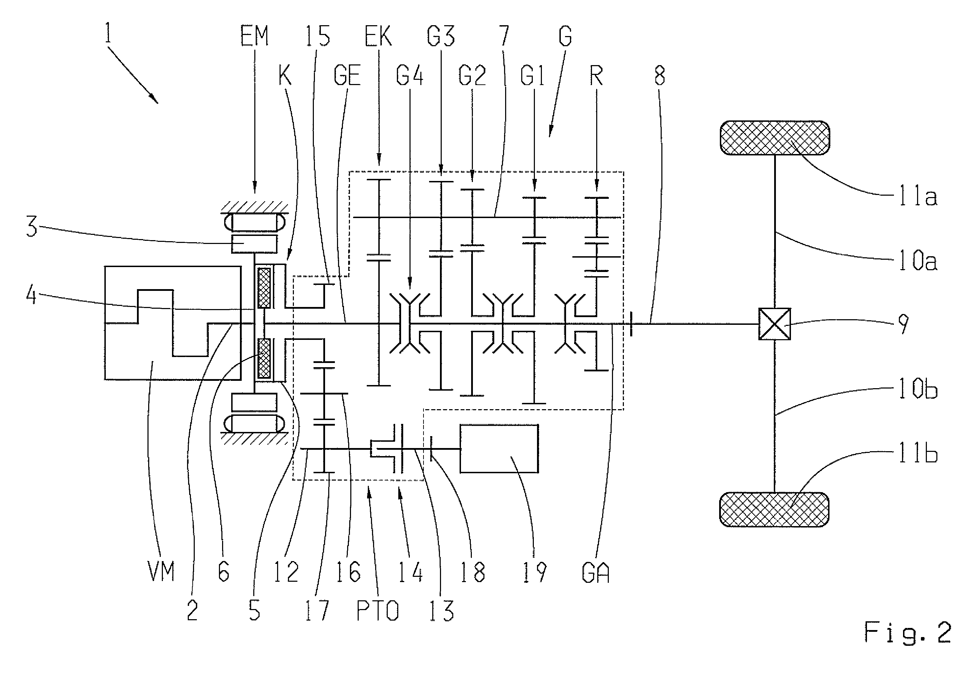

In Fig. 2 ist in schematischer Form eine an sich bekannte erste Ausführungsvariante eines Hybridantriebsstrangs 1 dargestellt, bei der das erfindungsgemäße Verfahren anwendbar ist. Der Hybridantriebsstrang 1 umfasst einen Verbrennungsmotor VM mit einer Triebwelle 2, ein automatisiertes Stufenschaltgetriebe G mit einer über eine steuerbare Trennkupplung K mit der Triebwelle 2 des Verbrennungsmotors VM verbindbaren Eingangswelle GE, eine als Motor und als Generator betreibbare Elektromaschine EM mit einem mit der Triebwelle 2 des Verbrennungsmotors VM in Triebverbindung stehenden Rotor 3, und einen mit der Triebwelle 2 des Verbrennungsmotors VM in Triebverbindung stehenden, so genannten motorabhängigen Nebenabtrieb PTO.

Die Elektromaschine EM ist vorliegend beispielhaft als ein Kurbelwelle-Starter-Generator ausgebildet, dessen Rotor 3 starr am Außenumfang einer an der Triebwelle 2 (Kurbelwelle) des Verbrennungsmotors VM montierten Schwungscheibe 4 befestigt ist. Die Trennkupplung K ist als eine Reibungskupplung ausgebildet und weist einen an der Schwungscheibe 4 befestigten Kupplungskorb 5 und eine auf der Eingangswelle GE drehfest angeordnete Mitnehmerscheibe 6 auf.

Das Stufenschaltgetriebe G ist vorliegend beispielhaft als ein synchronisiertes Vorgelege-Schaltgetriebe mit vier Vorwärtsgängen G1, G2, G3, G4 und einem Rückwärtsgang R ausgebildet. Die Vorgelegewelle 7 ist achsparallel zu der Eingangswelle GE angeordnet und steht mit dieser über eine als Zahnradpaar ausgebildete Eingangskonstante EK in Triebverbindung. Die Ausgangswelle GA ist koaxial benachbart zu der Eingangswelle GE angeordnet und zur Schaltung eines Direktgangs G4 über eine Gangkupplung mit der Eingangswelle GE koppelbar. Der Kraftfluss der weiteren Gänge G1, G2, G3, R erfolgt über jeweils einen zugeordneten Gangradsatz, der jeweils einen auf der Vorgelegewelle 7 drehfest angeordnetes Festrad und ein auf der Ausgangswelle GA drehbar gelagertes sowie über eine zugeordnete Gangkupplung mit dieser koppelbares Losrad umfasst. Der Gangradsatz des Rückwärtsgangs R weist zur Drehrichtungsumkehr zusätzlich ein Zwischenrad auf. Die Ausgangswelle GA steht über eine Kardanwelle 8 mit einem Achsdifferenzial 9 einer Antriebsachse in Triebverbindung, von dem beidseitig jeweils eine Achswelle 10a, 10b zu einem Antriebsrad 11 a, 11 b der Antriebsachse verläuft.

Der Nebenabtrieb PTO umfasst eine eingangsseitige Triebwelle 12 und eine koaxial benachbart angeordnete ausgangsseitige Triebwelle 13, die zum Einschalten und Abschalten des Nebenabtriebs PTO über eine Schaltkupplung 14 miteinander verbindbar und voneinander trennbar sind. Die Triebverbindung zwischen der Triebwelle 2 des Verbrennungsmotors VM und dem Nebenabtrieb PTO ist als ein Stirnrad-Getriebezug ausgebildet, der ein an dem Kupplungskorb 5 der Trennkupplung K angeordnetes Abtriebsrad 15, ein Zwischenrad 16 und ein an der eingangsseitigen Triebwelle 12 des Nebenabtriebs PTO befestigtes Antriebsrad 17 umfasst. An einem endseitig an der ausgangsseitigen Triebwelle 13 des Nebenabtriebs PTO angeordneten Abtriebsflansch 18 ist ein bedarfsweise antreibbares Aggregat 19 angeschlossen, wie z.B. der Antrieb einer Betonmischtrommel, der Kompressor einer Kühlanlage oder die Löschpumpe einer Feuerlöschanlage.

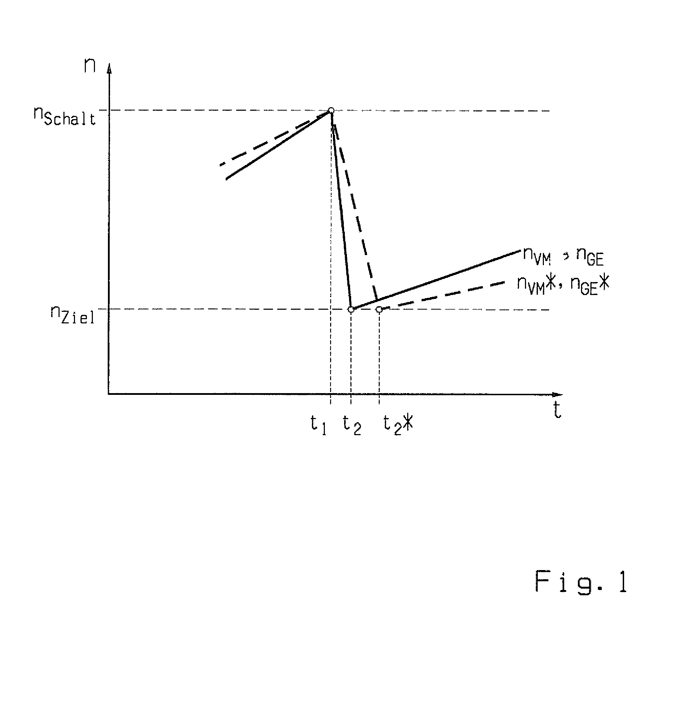

In Fig. 1 sind in vereinfachter schematischer Form mögliche Drehzahlverläufe der Triebwelle 2 des Verbrennungsmotors VM, d.h. der Motordrehzahl $n_{VM}$, $n_{VM}^*$ abgebildet, die sich bei einer Zug-Hochschaltung im Rahmen der Drehzahlanpassung des Verbrennungsmotors VM und der nachfolgenden Weiterbeschleunigung des Kraftfahrzeugs einstellen können. Im verbrennungsmotorischen Fahrbetrieb mit abgeschaltetem Nebenabtrieb PTO, d.h. ausgerückter Schaltkupplung 14, erfolgt die Drehzahlanpassung des Verbrennungsmotors VM entsprechend dem durchgezogenen Kurvenverlauf für $n_{VM}$ nach dem Öffnen der Trennkupplung K zwischen der Schaltdrehzahl $n_{Schalt}$ und der Zieldrehzahl $n_{Ziel}$ im Zeitraum zwischen den Zeitpunkten t1 und t2 weitgehend zeitgleich mit dem Synchronisieren und Einlegen des Zielgangs sowie dem Schließen der Trennkupplung K innerhalb des Stufenschaltgetriebes G. Danach wird das Kraftfahrzeug durch den Verbrennungsmotor VM weiter beschleunigt.

Ist der Nebenabtrieb PTO dagegen eingeschaltet, d.h. die Schaltkupplung 14 eingerückt, steht das Aggregat 19 permanent in Triebverbindung mit der Triebwelle 2 des Verbrennungsmotors VM. Aufgrund des einer Verzögerung und einer Beschleunigung des Verbrennungsmotors VM entgegenwirkenden trägheitsbedingten Drehmomentes des Nebenantriebs PTO und des an diesen angeschlossenen Aggregates 19 würde die schaltungsbedingte Drehzahlanpassung des Verbrennungsmotors VM ohne weitere Maßnahmen entsprechend dem strichpunktierten Kurvenverlauf für $n_{VM}^*$ langsamer erfolgen (von Zeitpunkt t1 bis Zeitpunkt t2*), so dass der Schaltungsablauf entsprechend verzögert würde. Ebenso würde die nachfolgende Weiterbeschleunigung des Kraftfahrzeugs durch den Verbrennungsmotor VM langsamer erfolgen, da das an den Nebenabtrieb PTO angeschossene Aggregat 19 mitbeschleunigt werden muss.

Dagegen ist erfindungsgemäß vorgesehen, dass bei eingeschaltetem Nebenabtrieb PTO die Elektromaschine EM während und nach der Zug-Hochschaltung derart angesteuert wird, dass diese während der Drehzahlanpassung des Verbrennungsmotors VM im Generatorbetrieb ein Bremsmoment ($M_{EM} < 0$) aufnimmt und während der nachfolgenden Beschleunigung des Kraftfahrzeugs im Motorbetrieb ein Antriebsmoment ($M_{EM} > 0$) abgibt, das jeweils möglichst dem der Verzögerung bzw. Beschleunigung der Triebwelle 2 des Verbrennungsmotors VM entgegenwirkenden trägheitsbedingten Drehmoment des Nebenantriebs PTO und des an diesen angeschlossenen Aggregates 19 im Betrag entspricht und dieses kompensiert. Bei entsprechender Ansteuerung der Elektromaschine EM ergibt sich somit bei der hier betrachteten Zug-Hochschaltung idealerweise wieder der Drehzahlverlauf $n_{vm}$ entsprechend dem durchgezogenen Kurvenverlauf, so dass der Schaltungsablauf und die nachfolgende Fahrbeschleunigung weitgehend den Abläufen mit abgeschaltetem Nebenabtrieb PTO entsprechen.

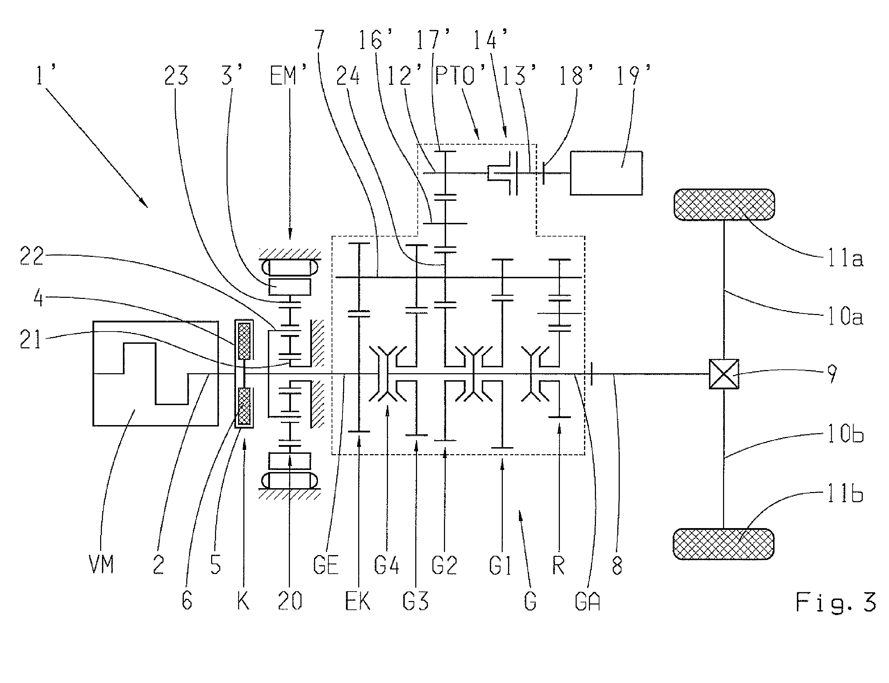

Eine in Fig. 3 in schematischer Form dargestellte, an sich bekannte zweite Ausführungsvariante eines Hybridantriebsstrangs 1' unterscheidet sich von der ersten Ausführungsvariante nach Fig. 2 nur durch eine andere triebtechnische Anbindung der Elektromaschine EM' und des Nebenabtriebs PTO'.

Die Elektromaschine EM' ist vorliegend an der Eingangswelle GE des Stufenschaltgetriebes G angeordnet, wobei deren Rotor 3' über ein Untersetzungsgetriebe 20 mit dieser Eingangswelle GE in Triebverbindung steht. Das Untersetzungsgetriebe 20 ist beispielhaft als ein einfaches Planetengetriebe ausgebildet, dessen Sonnenrad 21 gehäusefest arretiert ist, dessen Planetenträger 22 drehfest mit der Eingangswelle GE verbunden ist, und dessen Hohlrad 23 drehfest mit dem Rotor 3' der Elektromaschine EM' verbunden ist. Somit ergibt sich zwischen dem Rotor 3' der Elektromaschine EM' und der Eingangswelle GE des Stufenschaltgetriebes G eine Übersetzung im Bereich von $i_{EM}' = 1{,}25$ bis 1,67.

Der Nebenabtrieb PTO' ist bei sonst gleichem Aufbau nunmehr als ein so genannter kupplungsabhängiger Nebenabtrieb ausgebildet und steht somit in Triebverbindung mit der Eingangswelle GE des Stufenschaltgetriebes G. Die Triebverbindung zwischen der Eingangswelle GE und dem Nebenabtrieb PTO' erfolgt über die Eingangskonstante EK, die Vorgelegewelle 7 und einen Stirnradgetriebezug, der das Festrad 24 des Gangradsatzes des zweiten Gangs G2, ein Zwischenrad 16' und ein an der eingangsseitigen Triebwelle 12' des Nebenabtriebs PTO' befestigtes Antriebsrad 17' umfasst.

Zur Erläuterung des erfindungsgemäßen Verfahrens werden die in Fig. 1 dargestellten Kurvenverläufe nunmehr als Drehzahlverläufe $n_{GE}$, $n_{GE}^*$ der Eingangswelle GE des Stufenschaltgetriebes G angesehen, die sich bei einer Zug-Hochschaltung im Rahmen der Synchronisierung des Zielgangs und der nachfolgenden Weiterbeschleunigung des Kraftfahrzeugs einstellen können. Im verbrennungsmotorischen Fahrbetrieb mit abgeschaltetem Nebenabtrieb PTO', d.h. ausgerückter Schaltkupplung 14', erfolgt die Synchronisierung des Zielgangs entsprechend dem durchgezogenen Kurvenverlauf für $n_{GE}$ nach dem Öffnen der Trennkupplung K zwischen der Schaltdrehzahl $n_{Schalt}$ und der Zieldrehzahl $n_{Ziel}$ im Zeitraum zwischen den Zeitpunkten t1 und t2 weitgehend zeitgleich mit der Drehzahlanpassung des Verbrennungsmotors VM. Nach dem Einlegen des Zielgangs und dem Schließen der Trennkupplung wird das Kraftfahrzeug durch den Verbrennungsmotor VM weiter beschleunigt.

Ist der Nebenabtrieb PTO' dagegen eingeschaltet, d.h. die Schaltkupplung 14' eingerückt, steht das Aggregat 19' permanent in Triebverbindung mit der Eingangswelle GE. Aufgrund des einer Verzögerung und einer Beschleunigung der Eingangswelle GE entgegenwirkenden trägheitsbedingten Drehmomentes des Nebenantriebs PTO' und des an diesen angeschlossenen Aggregates 19' würde die Synchronisierung des Zielgangs ohne weitere Maßnahmen entsprechend dem strichpunktierten Kurvenverlauf für $n_{GE}^*$ langsamer erfolgen (von Zeitpunkt t1 bis Zeitpunkt t2*), so dass der Schaltungsablauf entsprechend verzögert würde. Ebenso würde die nachfolgende Weiterbeschleunigung des Kraftfahrzeugs durch den Verbrennungsmotor VM langsamer erfolgen, da das an den Nebenabtrieb PTO' angeschlossene Aggregat 19' mitbeschleunigt werden muss.

Dagegen ist erfindungsgemäß vorgesehen, dass bei eingeschaltetem Nebenabtrieb PTO' die Elektromaschine EM' während und nach der Zug-Hochschaltung derart angesteuert wird, dass diese während der Synchronisierung des Zielgangs im Generatorbetrieb ein Bremsmoment ($M_{EM} < 0$) aufnimmt und während der nachfolgenden Beschleunigung des Kraftfahrzeugs im Motorbetrieb ein Antriebsmoment ($M_{EM} > 0$) abgibt, welches jeweils möglichst dem der Verzögerung bzw. Beschleunigung der Eingangswelle GE des Stufenschaltgetriebes G entgegenwirkenden trägheitsbedingten Drehmoment des Nebenantriebs PTO' und des an diesen angeschlossenen Aggregates 19' im Betrag entspricht und dieses kompensiert. Bei entsprechender Ansteuerung der Elektromaschine EM' ergibt sich somit bei der hier betrachteten Zug-Hochschaltung idealerweise wieder der Drehzahlverlauf $n_{GE}$ entsprechend dem durchgezogenen Kurvenverlauf, so dass der Schaltungsablauf und die nachfolgende Fahrbeschleunigung weitgehend den Abläufen mit abgeschaltetem Nebenabtrieb PTO' entsprechen.

Bezugszeichen

| 1, 1' | Hybridantriebsstrang |
|---|---|
| 2 | Triebwelle von VM, Kurbelwelle |
| 3, 3' | Rotor der Elektromaschine EM bzw. EM' |
| 4 | Schwungscheibe des Verbrennungsmotor VM |
| 5 | Kupplungskorb der Trennkupplung K |
| 6 | Mitnehmerscheibe der Trennkupplung K |
| 7 | Vorgelegewelle des Stufenschaltgetriebes G |
| 8 | Kardanwelle |
| 9 | Achsdifferenzial |
| 10a, 10b | Achswellen |
| 11a, | 11 b Antriebsräder |
| 12, 12' | Eingangsseitige Triebwelle von PTO, PTO' |
| 13, 13' | Ausgangsseitige Triebwelle von PTO, PTO' |

| 14, 14' | Schaltkupplung von PTO, PTO' |
| 15 | Abtriebsrad von PTO |
| 16, 16' | Zwischenrad von PTO, PTO' |
| 17, 17' | Antriebsrad von PTO, PTO' |
| 18, 18' | Abtriebsflansch von PTO, PTO' |
| 19, 19' | Aggregat |
| 20 | Untersetzungsgetriebe |
| 21 | Sonnenrad |
| 22 | Planetenträger |
| 23 | Hohlrad |
| 24 | Festrad von G2 |
| EK | Eingangskonstante von G |
| EM, EM' | Elektromaschine |
| G | Getriebe, Stufenschaltgetriebe |
| G1 - G4 | Vorwärtsgänge |
| GA | Getriebeausgangswelle |
| GE | Getriebeeingangswelle |
| i | Übersetzung |
| $i_{EM}$, $i_{EM}$' | Übersetzung von EM, EM' |
| $i_{PTO}$, $i_{PTO}$' | Übersetzung von PTO, PTO' |
| J | Trägheitsmoment |
| $J_{PTO}$, $J_{PTO}$' | Trägheitsmoment von PTO, PTO' und Aggregat 19, 19' |
| K | Trennkupplung, Reibungskupplung |
| M | Drehmoment |
| $M_{EM}$, $M_{EM}$' | Drehmoment von EM bzw. EM' |
| n | Drehzahl |
| $n_{GE}$, $n_{GE}^{*}$ | Getriebeeingangsdrehzahl, Drehzahl an GE |
| $n_{Schalt}$ | Schaltdrehzahl |
| $n_{VM}$, $n_{VM}^{*}$ | Motordrehzahl |

| | |
|---|---|
| $n_{Ziel}$ | Zieldrehzahl |
| PTO, PTO' | Nebenabtrieb, power take-off |
| R | Rückwärtsgang |
| t | Zeit |
| t1, t2, t2* | Zeitpunkte |
| VM | Verbrennungsmotor |

**Patentansprüche**

1. Verfahren zur Steuerung eines Hybridantriebsstrangs eines Kraftfahrzeugs, beispielsweise eines Nutzfahrzeugs, der einen Verbrennungsmotor (VM) mit einer Triebwelle (2), ein automatisiertes Stufenschaltgetriebe (G) mit einer über eine steuerbare Trennkupplung (K) mit der Triebwelle (2) des Verbrennungsmotors (VM) verbindbaren Eingangswelle (GE), eine als Motor und als Generator betreibbare Elektromaschine (EM) mit einem mit der Triebwelle (2) des Verbrennungsmotors (VM) in Triebverbindung stehenden Rotor (3), und einen mit der Triebwelle (2) des Verbrennungsmotors (VM) in Triebverbindung stehenden Nebenabtrieb (PTO) umfasst, wobei ein an den Nebenabtrieb (PTO) angeschlossenes Aggregat (19) angetrieben wird, **dadurch gekennzeichnet, dass** bei einer gesteuerten Drehzahländerung $dnV_M/dt$ des Verbrennungsmotors (VM) das der Drehzahländerung entgegenwirkende trägheitsbedingte Drehmoment des Nebenantriebs (PTO) und des an diesen angeschlossenen Aggregates (19) durch die Abgabe oder Aufnahme eines diesem entgegengerichteten Drehmomentes ($M_{EM}$) der Elektromaschine (EM) weitgehend kompensiert wird.

2. Verfahren nach Anspruch 1, **dadurch gekennzeichnet, dass** während einer Hochschaltung innerhalb des Stufenschaltgetriebes (G) die Drehzahlanpassung des Verbrennungsmotors (VM) dadurch unterstützt wird, dass die Elektromaschine (EM) im Generatorbetrieb ein entsprechendes Bremsmoment ($M_{EM} < 0$) aufnimmt.

3. Verfahren nach Anspruch 1, **dadurch gekennzeichnet, dass** während einer Rückschaltung innerhalb des Stufenschaltgetriebes (G) die Drehzahlanpassung des Verbrennungsmotors (VM) dadurch unterstützt wird, dass die Elektromaschine (EM) im Motorbetrieb ein entsprechendes Antriebsmoment ($M_{EM} > 0$) abgibt.

4. Verfahren nach einem der Ansprüche 1 bis 3, **dadurch gekennzeichnet, dass** die Höhe des von der Elektromaschine (EM) aufzunehmenden oder abzugebenden Drehmomentes $M_{EM}$ nach der Gleichung

$$M_{EM} = J_{PTO} * \pi / (30 * i_{EM} * i_{PTO}^2) * dn_{VM}/dt$$

bestimmt wird, wobei mit $J_{PTO}$ das Trägheitsmoment des Nebenantriebs (PTO) und des an diesen angeschlossenen Aggregates (19), mit $i_{EM}$ die Übersetzung zwischen dem Rotor (3) der Elektromaschine (EM) und der Triebwelle (2) des Verbrennungsmotors (VM), mit $i_{PTO}$ die Übersetzung zwischen der Triebwelle (2) des Verbrennungsmotors (VM) und dem Abtriebsflansch (18) des Nebenabtriebs (PTO), und mit $dnV_M/dt$ der vorgesehene Drehzahlgradient an der Triebwelle (2) des Verbrennungsmotors (VM) bezeichnet sind.

5. Verfahren zur Steuerung eines Hybridantriebsstrangs eines Kraftfahrzeugs, beispielsweise eines Nutzfahrzeugs, der einen Verbrennungsmotor (VM) mit einer Triebwelle (2), ein automatisiertes Stufenschaltgetriebe (G) mit einer über eine steuerbare Trennkupplung (K) mit der Triebwelle (2) des Verbrennungsmotors (VM) verbindbaren Eingangswelle (GE), eine als Motor und als Generator betreibbare Elektromaschine (EM') mit einem mit der Eingangswelle (GE) des Stufenschaltgetriebes (G) in Triebverbindung stehenden Rotor (3'), und einen mit der Eingangswelle (GE) des Stufenschaltgetriebes (G) in Triebverbindung stehenden Nebenabtrieb (PTO') umfasst, wobei ein an den Nebenabtrieb (PTO') angeschlossenes Aggregat (19') angetrieben wird, **dadurch gekennzeichnet, dass** bei einer gesteuerten Drehzahländerung $dn_{GE}/dt$ der Eingangswelle (GE) des Stufenschaltgetriebes (G) das der Drehzahländerung entgegenwirkende trägheitsbedingte Drehmoment des Nebenabtriebs (PTO') und des an diesen angeschlossenen Aggregates (19') durch die Abgabe oder Aufnahme eines diesem entgegengerichteten Drehmomentes

($M_{EM}$') der Elektromaschine (EM') weitgehend kompensiert wird.

6. Verfahren nach Anspruch 5, **dadurch gekennzeichnet, dass** während einer Hochschaltung innerhalb des Stufenschaltgetriebes (G) die Synchronisierung des Zielgangs dadurch unterstützt wird, dass die Elektromaschine (EM') im Generatorbetrieb ein entsprechendes Bremsmoment ($M_{EM}$' < 0) aufnimmt.

7. Verfahren nach Anspruch 5, **dadurch gekennzeichnet, dass** während einer Rückschaltung innerhalb des Stufenschaltgetriebes (G) die Synchronisierung des Zielgangs dadurch unterstützt wird, dass die Elektromaschine (EM') im Motorbetrieb ein entsprechendes Antriebsmoment ($M_{EM}$' > 0) abgibt.

8. Verfahren nach wenigstens einem der Ansprüche 5 bis 7, **dadurch gekennzeichnet, dass** die Höhe des von der Elektromaschine (EM') aufzunehmenden oder abzugebenden Drehmomentes $M_{EM}$' nach der Gleichung

$$M_{EM}' = J_{PTO}' * \pi / (30 * i_{EM}' * i_{PTO}'^2) * dn_{GE}/dt$$

bestimmt wird, wobei mit $J_{PTO}$' das Trägheitsmoment des Nebenantriebs (PTO') und des an diesen angeschlossenen Aggregates (19'), mit $i_{EM}$' die Übersetzung zwischen dem Rotor (3') der Elektromaschine (EM') und der Eingangswelle (GE) des Stufenschaltgetriebes (G), mit $i_{PTO}$' die Übersetzung zwischen der Eingangswelle (GE) des Stufenschaltgetriebes (G) und dem Abtriebsflansch (18') des Nebenabtriebs (PTO'), und mit $dn_{GE}/dt$ der vorgesehene Drehzahlgradient an der Eingangswelle (GE) des Stufenschaltgetriebes (G) bezeichnet sind.

9. Verfahren nach einem der Ansprüche 1 bis 8, **dadurch gekennzeichnet, dass** beim Anfahren mit anfänglich schlupfender Trennkupplung (K) die Elektromaschine (EM, EM') zur Kompensation des trägheitsbedingten Drehmomentes des Nebenantriebs (PTO, PTO') und des an diesen angeschlossenen Aggregates (19, 19') im Motorbetrieb zumindest ein entsprechendes Antriebsmoment ($M_{EM}$ > 0, $M_{EM}$' > 0) abgibt.

10. Verfahren nach einem der Ansprüche 1 bis 9, **dadurch gekennzeichnet, dass** bei einer Beschleunigung des Kraftfahrzeugs während der Fahrt mit geschlossener Trennkupplung (K) die Elektromaschine (EM, EM') zur Kompensation des trägheitsbedingten Drehmomentes des Nebenantriebs (PTO, PTO') und des an diesen angeschlossenen Aggregates (19, 19') im kraftlosen Ruhezustand ($M_{EM}$ = 0, $M_{EM}$' = 0) eingeschaltet wird und dann im Motorbetrieb ein entsprechendes Antriebsmoment ($M_{EM}$ > 0, $M_{EM}$' > 0) abgibt, bei schon vorliegendem Motorbetrieb ein entsprechend erhöhtes Antriebsmoment abgibt, und bei vorliegendem Generatorbetrieb ein entsprechend verringertes Bremsmoment aufnimmt.

11. Verfahren nach einem der Ansprüche 1 bis 9, **dadurch gekennzeichnet, dass** beim Verzögern des Kraftfahrzeugs während der Fahrt mit geschlossener Trennkupplung (K) die Elektromaschine (EM, EM') zur Kompensation des trägheitsbedingten Drehmomentes des Nebenantriebs (PTO, PTO') und des an diesen angeschlossenen Aggregates (19, 19') im kraftlosen Ruhezustand ($M_{EM}$ = 0, $M_{EM}$' = 0) eingeschaltet wird und dann im Generatorbetrieb ein entsprechendes Bremsmoment ($M_{EM}$ < 0, $M_{EM}$' < 0) aufnimmt, bei schon vorliegendem Generatorbetrieb ein entsprechend erhöhtes Bremsmoment aufnimmt, und bei vorliegendem Motorbetrieb ein entsprechend verringertes Antriebsmoment abgibt.

Fig. 1

Fig. 2

EP 2 450 216 A2

Fig. 3

EP 2 450 216 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007055830 A1
- US 20090018716 A1